# EUROPEAN PATENT SPECIFICATION

(11) **EP 3 867 452 B1**
(45) Date of publication and mention of the grant of the patent: **04.12.2024**
(21) Application number: 19874224.9
(22) Date of filing: 16.10.2019
(51) Int. Cl.: E02F 3/18, E02F 3/24, E02F 9/00, B65G 65/16, B62D 59/04, B62D 63/06

(54) **A ROTABLE BUCKET WHEEL ASSEMBLY AND A METHOD FOR REFURBISHING AN ASSOCIATED BUCKET WHEEL RECLAIMER**
DREHBARE SCHAUFELRADANORDNUNG UND VERFAHREN ZUR SANIERUNG EINES ZUGEHÖRIGEN SCHAUFELRADRÜCKLADERS
ENSEMBLE ROUE À GODETS ROTATIF ET PROCÉDÉ DE REMISE À NEUF D'UN APPAREIL DE REPRISE DE ROUE À GODETS ASSOCIÉ

(30) Priority: 16.10.2018 AU 2018903907; 25.02.2019 AU 2019900592
(43) Date of publication of application: 25.08.2021
(73) Proprietor: Technological Resources PTY. Limited, Melbourne, VIC 3000 (AU)
(72) Inventor: DE WET, Gustav, Perth, Western Australia 6000 (AU); NITSCHE, Heinz, Perth, Western Australia 6000 (AU); HORN, Dirk, Osborne Park, Western Australia 6017 (AU); MAAS, Jochen, Perth, Western Australia 6000 (AU); DORRINGTON, Andrew, Perth, Western Australia 6000 (AU); PLETZ, Rudolf, 8700 Leoben (AT); SMAJLOVIC, Belmin, 8700 Leoben (AT); DÖSINGER, Lukas, 8700 Leoben (AT); SCHLIMME, Wolfgang, Perth, Western Australia 6000 (AU); NEUFELDT, Patrick, 04347 Leipzig (DE); MUNDIK, Peter, Perth, Western Australia 6000 (AU); MARKOVIC, Miodrag, Perth, Western Australia 6000 (AU); PETACK, Burkhard, 04347 Leipzig (DE); RADICI, Anthony, Perth, Western Australia 6000 (AU)
(74) Representative: Kilburn & Strode LLP
(86) International application number: PCT/AU2019/051123
(87) International publication number: WO 2020/077402

(56) References cited:
- WO-A1-2009/117760
- WO-A1-2017/144095
- US-A- 3 500 563
- US-A1- 2009 273 159
- No further relevant documents disclosed

## Description

### TECHNICAL FIELD

A rotable bucket wheel assembly and a method for refurbishing a bucket wheel reclaimer are disclosed.

### BACKGROUND ART

The maintenance and repair of a rotable bucket wheel assembly of a bucket wheel reclaimer are difficult and expensive exercises. In one method, this may involve the disassembly of component parts of the rotable bucket wheel assembly such as the bucket wheel itself, drive system, drive shaft, bearings, ring chute and discharge chute. While this disassembly occurs, and maintenance is being performed the bucket wheel reclaimer is unable to operate.

To speed up the maintenance process and thereby minimise downtime it has been proposed to construct a rotable bucket wheel assembly as an integral unit that can be disconnected from a bucket wheel reclaimer and moved as a unit to a maintenance location. While this is occurring a new or refurbished rotable bucket wheel assembly can be fitted to the reclaimer to enable normal operation.

WO 2017/144095 A1 discloses a bucket wheel machine system and a method for maintenance of such a bucket wheel machine system.

US 2009/273159 A1 discloses a dual lane, multi-axle transport vehicle for moving heavy loads including a forward module mounted on a plurality of axles and a rearward module mounted on a plurality of axles.

The above references to the background art do not constitute an admission that the art forms a part of the common general knowledge of a person of ordinary skill in the art.

### SUMMARY OF THE DISCLOSURE

In one aspect there is disclosed rotable bucket wheel assembly for coupling to a boom of a bucket wheel reclaimer comprising:
a bucket wheel;
a shaft coupled to the bucket wheel;
bearings through which the shaft extends; and
a structural frame on which the bucket wheel and shaft are supported,
wherein the structural frame is arranged for demountable attachment to an end of a boom of a bucket wheel reclaimer.

In one embodiment the structural frame comprises a plurality of coupling points to enable coupling to a transfer system to facilitate transferring the load of the bucket wheel assembly from the boom to the transfer system whereby the bucket wheel assembly is capable of being transported away from the boom by the transfer system.

In one embodiment the coupling points are configured to facilitate coupling with the transfer system when the transfer system is disposed beneath the structural frame.

In one embodiment the structural frame is provided with a plurality of connecting mechanisms configured to cooperate with complementary connecting mechanisms on the boom, wherein when the structural frame is attached to the boom the connecting mechanisms on the frame engage the connecting mechanisms on the frame.

In one embodiment the connecting mechanisms comprise locating elements formed on the structural frame and arranged to cooperate with associated locating elements on the boom and wherein upon engagement of the locating elements remaining connecting mechanisms on the structural frame are in alignment with associated remaining connecting mechanisms on the boom.

In one embodiment the locating elements comprise hooks formed on the structural frame.

In one embodiment the locating elements comprise a plurality of pad eyes configured to receive coupling pins.

In one embodiment the rotable bucket assembly comprises a drive system mounted on the shaft.

In one embodiment the rotable bucket assembly comprises a conveyor pulley rotatably coupled to the structural frame.

In various embodiments the rotable bucket wheel assembly may also include any one or any combination of two or more of:
- a discharge chute,
- buckets attached to the bucket wheel,
- a ring chute,
- a discharge chute,
- a plurality of rollers located adjacent the discharge chute, and
- quick disconnect power and communications cables and water and lubrication hoses

The structural frame of the assembly forms a part of the boom of the bucket wheel reclaimer. Therefore, embodiments of the disclosed assembly can facilitate the maintenance of a rotable bucket wheel of a bucket wheel reclaimer by decoupling the structural frame from the remaining part of the boom and moving it to maintenance location. The bucket wheel assembly can be placed back into operation during the maintenance by attaching the structural frame of a like assembly to the boom.

In a second aspect there is disclosed a boom for a rotable bucket wheel reclaimer comprising:
a first structural portion having a front end; and
a structural frame demountable coupled to the front end of the first structural portion wherein the structural frame is the structural frame of a rotable bucket wheel assembly according to the first aspect.

In a third aspect there is disclosed a method of refurbishing a bucket wheel reclaimer having a boom supporting a rotable bucket wheel assembly the method comprising:
forming the boom as a first structural portion and a demountable structural frame coupled to a front end of the first structural portion wherein the structural frame is the structural frame of a rotable bucket wheel assembly in accordance with the first aspect;
uncoupling the structural frame from the front end of the boom; and
moving the bucket wheel assembly as a single unit to a maintenance location.

In on embodiment, moving the bucket wheel assembly comprises transferring the load of the bucket wheel assembly to a transfer system disposed beneath the structural frame.

In one embodiment the method comprises locating a transfer system beneath the structural frame and engaging the coupling points of the structural system with the transfer system wherein the transfer system carries the load of the bucket wheel assembly.

In one embodiment the method comprises disconnecting the connecting mechanisms of the structural frame from associated connecting mechanisms on the boom when the load of the bucket wheel assembly is transferred to the transfer system.

In one embodiment transferring the load of the bucket wheel assembly comprises operating a jack system on the transfer system.

In one embodiment the rotable bucket assembly comprises forming the transfer system as a transfer frame and a self-propelled modular trailer on which the transfer frame is demountable supported.

In one embodiment locating the transfer system comprises driving the self-propelled modular trailer on which the transfer frame is demountable supported to a position wherein the transfer frame is below the structural frame.

In one embodiment engaging the coupling points of the structural system with the transfer system comprises one or both of (a) operating the self-propelled modular trailer to lift the transfer frame into contact with the structural frame; and (b) operating a jack system on the transfer frame.

In one embodiment the method comprises forming the transfer system as a transfer frame on bogie mounted on a rail system.

In one embodiment locating the transfer system comprises driving the bogie on the rail system to a position wherein the transfer frame is below the structural frame.

Disclosed herein is a transfer system for facilitating the removal of a bucket wheel assembly from a boom of a bucket wheel reclaimer, the transfer system comprising a transport frame configured to support the bucket wheel assembly from a location beneath the bucket wheel assembly, and a jack system coupled with the transport frame and located on a portion of the transfer frame wherein the when operated the jack system is able to contact the bucket wheel assembly and transfer the load of the bucket wheel assembly to the transfer frame.

The transfer system may comprise: a trailer or self-propelled modular trailer or a rail mounted bogie on which the transfer frame is supported.

In various embodiments the rotable bucket wheel assembly may also include any one or any combination of:
- a discharge chute,
- buckets attached to the bucket wheel,
- a ring chute,
- a discharge chute,
- a plurality of rollers located adjacent the discharge chute
- a drive unit to rotate the bucket wheel,
- a conveyor pulley,
- quick disconnect power and communications cables and water and lubrication hoses

The structural frame of the assembly forms a part of the boom of the bucket wheel reclaimer. Therefore, embodiments of the disclosed assembly can facilitate the maintenance of a rotable bucket wheel of a bucket wheel reclaimer by decoupling the structural frame from the remaining part of the boom and moving it to maintenance location. The bucket wheel assembly can be placed back into operation during the maintenance by attaching the structural frame of a like assembly to the boom.

### BRIEF DESCRIPTION OF THE DRAWINGS

Notwithstanding any other forms which may fall within the scope of the apparatus and method as set forth in the Summary, specific embodiments will now be described, by way of example only, with reference to the accompanying drawings in which:
Figure 1 is a photograph of a prior art bucket wheel reclaimer;
Figures 2a and 2b are photographs from different angles of a front portion of a boom of a prior art bucket wheel reclaimer showing a rotable bucket wheel;
Figures 3a, 3b and 3c are isometric, plan and elevation views respectively of a first embodiment of the disclosed rotable bucket wheel assembly;
Figure 4 is a schematic representation of an embodiment of the disclosed rotable bucket wheel reclaimer which incorporates an embodiment of the rotable bucket wheel assembly shown in Figures 3a, 3b and 3c
Figure 5 is a representation of the boom with attached bucket wheel assembly coupled to a support cradle;
Figure 6 illustrates a transfer system utilised in the method for refurbishing the bucket wheel assembly being driven toward the boom in support cradle shown in Figure 5;
Figure 7 shows the transfer system located underneath but spaced from the bucket wheel assembly;
Figure 8 shows a transfer system coupled with the bucket wheel assembly and elevating the bucket wheel assembly relative to the boom to uncouple it from the boom, and showing hooks of the structural frame disengaged with associated pins on the boom;
Figure 9 shows the transfer system transporting the disconnected bucket wheel assembly away from the boom;
Figure 10a shows transfer system approaching a maintenance platform;
Figure 10b shows transfer system in position ready to offload the bucket wheel assembly;
Figure 10c shows transfer system operated to transfer the load of the bucket wheel assembly to the maintenance platform;
Figure 10d shows a self-propelled mobile trailer of the transfer system being driven out from the maintenance platform;
Figure 11 depicts one possible arrangement of a maintenance area facilitating the swap out of a rotable bucket wheel assembly;
Figure 12 is a schematic representation of a second embodiment of the disclosed bucket wheel assembly and associated equipment to enable performance of a second embodiment of a method for refurbishing or swapping out the bucket wheel assembly;
Figure 13 is a schematic representation of two types of connection mechanism that may be incorporated in the second embodiment of the disclosed bucket wheel assembly;
Figure 14a is a schematic representation of a support cradle that may be incorporated in a method of refurbishing or swapping out a bucket wheel assembly;
Figure 14b is an enlarged view of a portion of the support cradle shown in Figure 14a;
Figure 14c is a partial section view of a portion of the support cradle shown in Figure 14a;
Figure 15a is a perspective view of a maintenance platform that may be incorporated in the second embodiment of the disclosed method;
Figure 15b is a schematic representation of a second embodiment of the bucket wheel assembly located within the maintenance platform shown in Figure 15a and depicting possible degrees of freedom of movement applicable to the bucket wheel assembly;
Figure 15c is a further representation of the second embodiment of the bucket wheel assembly in the maintenance platform but depicting additional degrees of freedom of movement applicable to the bucket wheel assembly;
Figure 16 is a schematic representation of a transport frame that may be used in the second embodiment of the disclosed method, and incorporated in a transfer system used to perform the disclosed method;
Figure 17a is a representation of the transport frame shown in Figure 16 supporting a bucket wheel assembly;
Figure 17b the schematic representation of a portion of a jack system incorporated in the transport frame shown in Figure 17a;
Figure 17c the schematic representation of a lift and lock mechanisms of the jack system incorporated in the transport frame shown in Figure 17a;
Figure 18 is representation of a third embodiment of the rotable bucket wheel assembly coupled to a boom of a reclaimer showing an approaching track mounted transfer system for performing of a third embodiment of the disclosed method for refurbishing or swapping out the bucket wheel assembly;
Figure 19 shows the third embodiment of the disclosed rotable bucket wheel assembly disconnected from the boom and being transported by the transfer system shown in Figure 18;
Figure 20 shows the disconnected rotable bucket wheel assembly and transfer system of Figure 19 together with a refurbished or new bucket wheel assembly on a second transfer system approaching the boom;
Figure 21 shows a portion of the transfer system shown in Figures 18-20.

### DETAILED DESCRIPTION OF SPECIFIC EMBODIMENT

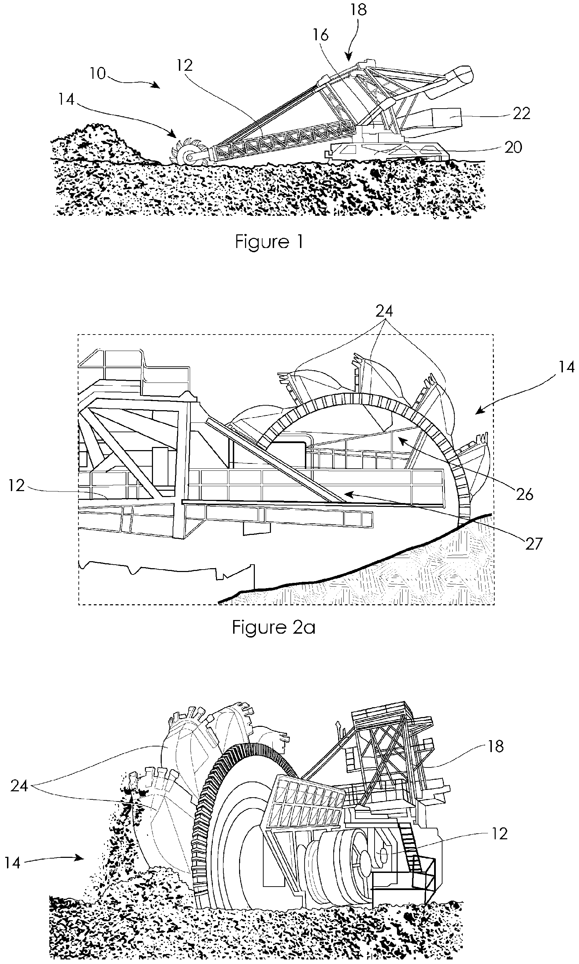

Figure 1 shows a prior art bucket wheel reclaimer 10. The reclaimer 10 has a boom 12 with a rotable bucket wheel 14 supported at a front end. The boom 12 is pivotally connected at an end opposite the bucket wheel 14 to a body structure 16. A tower 18 extends upwardly from the body structure 16 and mechanically supports the front end of the boom 12. The reclaimer 10 has rail wheels which run on as associate rail, and a switch room 22.

Figures 2a and 2b provide a close-up view of a front end portion of the boom 12 of the bucket wheel reclaimer 10. The bucket wheel 14 is rotatably supported at the front end of the boom 12. The bucket wheel 14 is shown with a plurality of attached buckets 24 and a ring chute 26. Material picked up by the buckets 24 as the bucket wheel 14 rotates is dropped by gravity into the ring chute 26 and channelled onto and underlying conveyor 27.

When the bucket wheel 14 is being maintained or repaired it may be decoupled from the boom 12 and lifted by a crane onto a transport vehicle, driven to a maintenance location, then lifted again by crane from the vehicle onto a purpose-built jig to facilitate maintenance and/or repair.

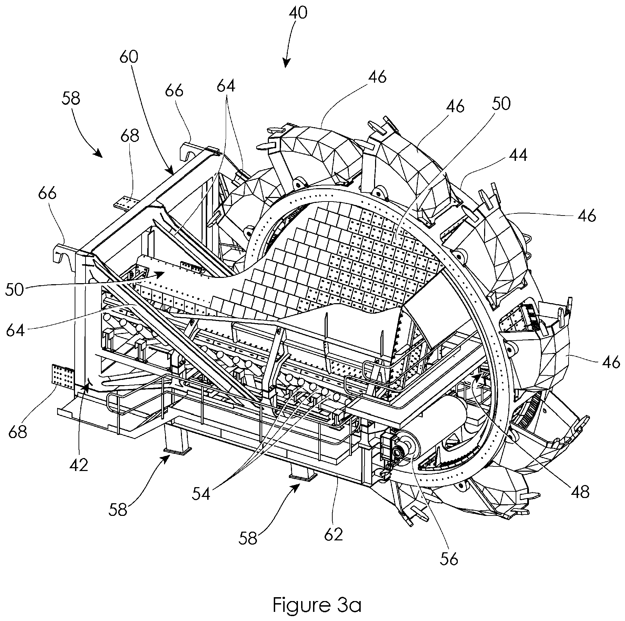

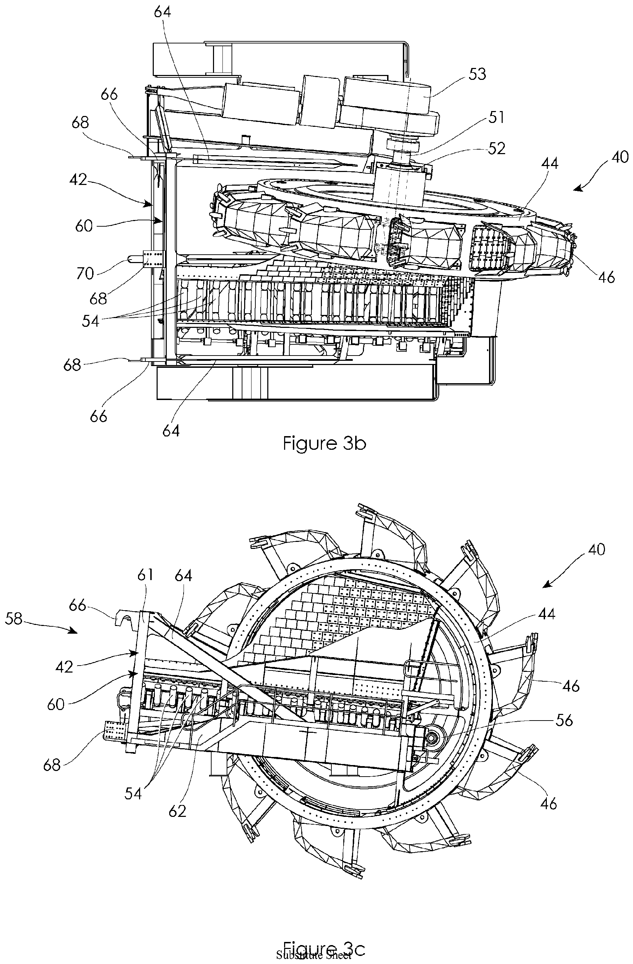

Figures 3a-4 depict an embodiment of the disclosed rotable bucket wheel assembly 40 (herein after also referred to as "bucket wheel assembly 40" or "assembly 40") coupled to a boom 12a of a bucket wheel reclaimer 10a. The bucket wheel assembly 40 includes a structural frame 42 that in use forms a structural part of the boom of a bucket wheel reclaimer. The structural frame 42 supports a bucket wheel 44 having a plurality of attached buckets 46; a ring chute 48 and associated discharge chute 50. The bucket wheel 44 is attached to the middle of shaft 51, which is supported by two bearings (one shown as item 52, the other being hidden under the bucket wheel discharge chute). The drive unit is attached to the shaft 51 to provide the rotation torque, and the drive unit is also attached to the structure 42. The structural frame 42 couples to a portion of the reclaimer boom and transfers the load of the assembly 40 to the reclaimer boom when the reclaimer is in operation.

The bucket wheel assembly 40 may also include a plurality of rollers 54 in the form of conveyor belt idler support/troughing rollers. The rollers 54 are located adjacent the discharge chute 50. When the bucket wheel assembly 40 is in use, the bucket wheel 44 rotates relative to the ring chute 48/discharge chute 50. Material picked up by the buckets 46 is held in the buckets by the ring chute 48 and is then dumped by gravity onto the discharge chute 50 onto a conveyor (not shown) that runs over the rollers 54.

Also supported on the structural frame 42 forward of the rollers 54 is a boom conveyor pulley 56. A reclaimer boom conveyor (not shown), which runs along the length of the boom, turns about the pulley 54.

The structural frame 42 is provided with a plurality of coupling points 58 to facilitate connection to a machine to enable the rotable bucket wheel assembly 40 to be supported and lifted relative to the boom and then moved away from the reclaimer for example to a repair/maintenance location. The coupling points 58 are distributed about the structural frame 42 to ensure that the load of the rotable bucket wheel assembly 40 is substantially balanced when supported and lifted by the crane. The coupling points may be in the form of pinned coupling, hooked couplings or bolted couplings. The coupling points 58 in this embodiment are configured to facilitate coupling with a jacking mechanism or machine disposed beneath the structural frame 42. In this instance the coupling points 58 also act as jacking points. Therefore, in this embodiment there is no need for a crane to lift the structural frame 42 and the bucket wheel assembly 40, but rather a mechanism or machine beneath the bucket wheel assembly 40.

The ability to swap out a bucket wheel assembly 40 without the use of a crane has advantages over know prior art methods. The assembly 40 may have a mass in the order of 130 tonnes or more. Therefore, a heavy lift crane would be required. Such cranes are very expensive to hire and due to their limited number not always available particularly if an off-cycle maintenance and repair is required. This is of course not to say that in other embodiments the coupling points 58 cannot be arranged to facilitate connection with a crane.

Looking more closely the structural frame 42 has:
- a mounting structure 60 that lies in a generally vertical plane and facilitates mounting of the bucket wheel assembly 40 to the remainder of the boom 12a;
- a base structure 62 that lies in a generally horizontal plane and is fixed to the mounting structure 60; and
- a plurality of diagonally extending braces 64 running from a upper end of the mounting structure 60 to the base structure 62.

The mounting structure 60 includes a rectangular frame 61 and a number of connecting mechanisms for connecting the bucket wheel assembly 40 to the rest of the boom 12a of a corresponding bucket wheel reclaimer 10a. In this embodiment there are six connecting mechanisms although in other embodiments this number may vary. Also, three different types of connecting mechanisms are incorporated. A first type incorporates or comprises locating elements, in this embodiment in the form of hooks 66, one at each of the upper corners of the rectangular frame 61. The hooks 66 are configured to sit on and engage corresponding pins fixed to the distal end of the boom 12a.

A second type of connecting mechanism incorporated in this embodiment is a fish plate 68. Three fish plates 68 are provided as part of the mounting structure 60. One fish plate 68 is on an upper element of the rectangular frame 61 in line with and midway between the hooks 66. One of each of the remaining two fish plates 68 are located at the lower corners of the rectangular frame 61. These two fish plates are in orthogonal plane to the fish plate 68 on the upper element.

A third type of connecting mechanism in this embodiment is a shear key 70 (Fig 3b). This is in alignment with and midway between the fish plates 68 at the lower corners of the rectangular frame 61.

When coupled to the boom 12a the hooks 66 carry the vertical load of the assembly 40 and shear key 70 transmits lateral forces resulting from operation of the reclaimer 10a. The fish plates 68 are bolted to the front end of the boom 12a to demountably fix the assembly 40 to the boom 12a.

Additionally, during the reattachment of the assembly 40 the hooks 66 assists in aligning the bucket wheel assembly 40 and in particular the fish plates 68 to facilitate an operational connection to the boom 12a

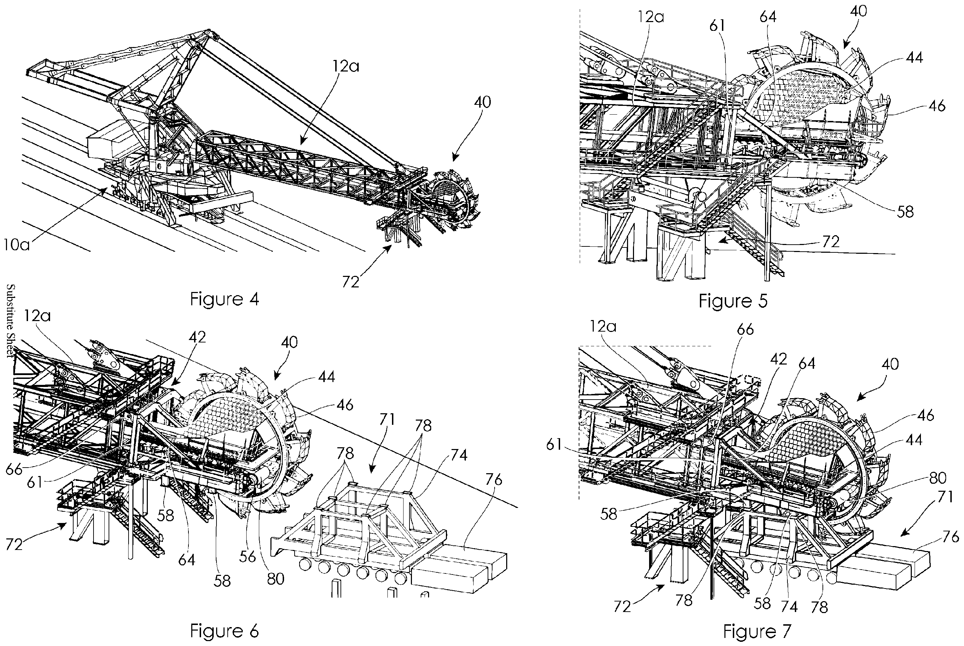

Figures 4 to 11 show sequentially an embodiment of the disclosed method for replacing/refurbishing a bucket wheel assembly 40.

To start the removal of the bucket wheel assembly 40, the reclaimer 10a is driven to a location where a front end of the boom 12a can be lowered onto a tie down cradle 72. As shortly explained the removal of the bucket wheel assembly 40 also uses a transfer system 71 which in this embodiment comprises the combination of transport frame 74 and jack system which is incorporated in a self-propelled modular trailer (SPMT) 76 illustrated in Figures 6-10. In general terms the transfer system 71 facilitates the removal of a bucket wheel assembly 40 from the boom 12a of a bucket wheel reclaimer 10a. The transfer system 71 comprises the transport frame 74 which is configured to support the bucket wheel assembly 40 from a location beneath the bucket wheel assembly 40, and a jack system coupled with the transport frame 74.

The jack system is operable to enable contact between the transfer system and the bucket wheel assembly 40. Here the jack system is provided in or by the SPMT 76 which also is drivable to move or transfer the bucket wheel assembly 40 away from the boom 12a and the reclaimer 10a. But in other embodiments described later the jack system can be incorporated in the transfer frame 74 itself.

One possible procedure for the removal of the bucket wheel assembly 40 will now be described.

As a precursor to decoupling the bucket wheel assembly 40 from the boom 12a the transfer system 71 (i.e. the transport frame 74 loaded on the SPMT 76) is driven close to the tie down cradle 72. The reclaimer 10a is driven into a location where the boom 12a can be lowered onto the support cradle 72 such as shown in Figures 5 and 6. The boom 12a is luffed down and slewed to a designated slew angle ensuring access by the transport frame 74 and SPMT 76.

A hold down rope may be slung about the boom connection and secured. Optionally additional jacking cylinders may be installed to jack against the boom 12a to positively arrest the position of the boom 12a prior to commencing decoupling of the bucket wheel assembly 40.

Figures 6, 7 and 8 show sequentially the transfer system 71 being driven underneath the bucket wheel assembly 40 to the purposes of removing the bucket wheel assembly 40 from the boom 12a. Figure 6 shows the transfer system 71, constituted by the SPMT 76 on which the transport frame 74 is carried, being driven in alignment with and toward the bucket wheel assembly 40.

Figure 7 shows the SPMT 76 and the transport frame 74 (i.e. the transfer system 71) beneath the bucket wheel assembly 40. The jacking points 58 on the structural frame 42 are in alignment with but spaced from corresponding seats 78 on the underlying transport frame 74.

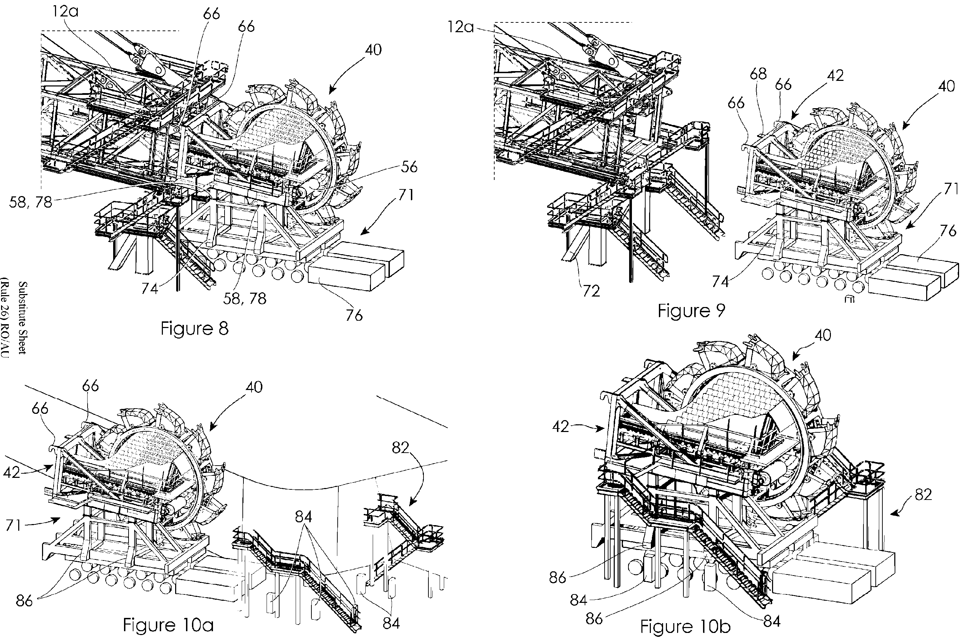

With the boom 12a is supported on the support cradle 72 and arrested against uncontrolled movement:
- electrical, grease, air, water, and comms services are disconnected;
- the boom conveyor belt 80 together with associated scrapers and can be removed (as seen in Figure 8 which show the roller 56 without the associated belt 80); and
- the bolts connecting the fish plates 68 to the front end of the boom 12a can now be safely removed.

As an aside, the removal of the conveyor belt may be part of a planned conveyor belt change out.

The bucket wheel assembly 40 can now be jacked upwardly using the jack system of the SPMT 76 to lift the hooks 66 above the corresponding locating pins on the boom 12a. This is also shown in Figure 8. The bucket wheel assembly 40 is now totally free of the boom 12a and its load is fully supported by the transfer system 71.

As shown in Figure 9 the transfer system 71/SPMT 76 can be driven to a maintenance location. During this process the SPMT 76 can be operated to lower the bucket wheel assembly 40 thereby lowering the centre of gravity and enhancing safety.

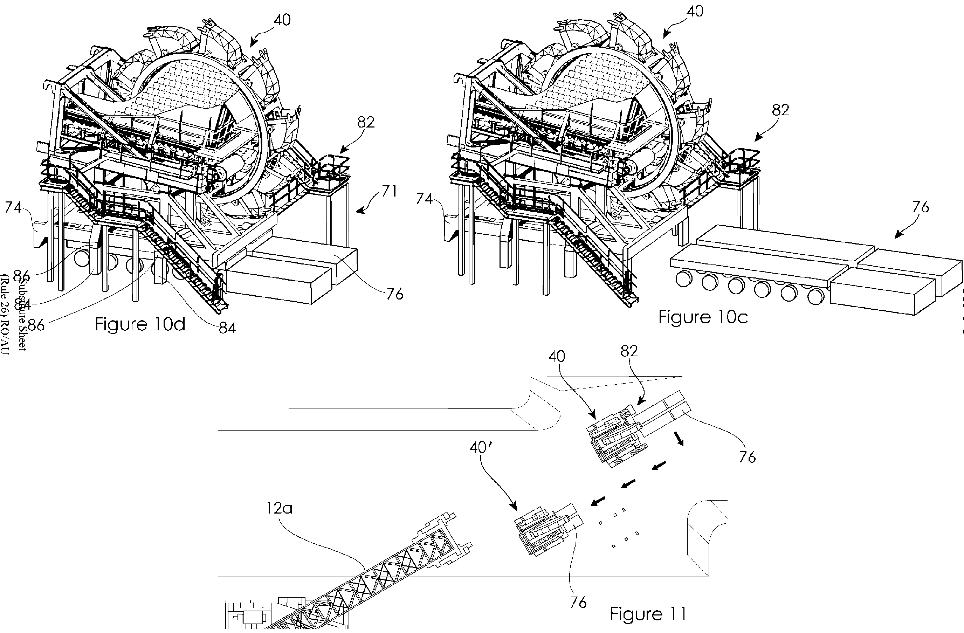

Figure 10a shows a maintenance platform 82 and associated transport frame supports 84 at a maintenance location. The maintenance platform 82 includes stairs and walkways to enable easy access by maintenance staff to the bucket wheel assembly 40. The SPMT 76 is driven so that shoulders 86 of the transport frame 74 are in alignment with the supports 84 as shown in Figure 10b. The SPMT 76 is now lowered so that the shoulders 86 engage the supports 84. The load of the transport frame 74 is now carried by the supports 84, as depicted in Figure 10c. The shoulders 86 can be bolted to the supports 84 prior to the SPMT 76 being further lowered and driven out from under the transport frame 74, as shown in Figure 10d.

The SPMT 76 is then driven to pick up a new or refurbished bucket wheel assembly 40' for installation on the front end of the boom 12a, as shown in Fig 11. The new or refurbished bucket wheel assembly 40' is supported on another transport frame 74 at a location near the support cradle 72 and elevated for example on supports similar to the supports 84 to enable the SPMT 76 to drive beneath the transport frame 74.

The sequence for installation is in essence the reverse of that for the removal and in summary involves the following steps:
- SPMT 76 is driven to lie beneath the transport frame 74
- The jack system of the SPMT 76 is operated so that the SPMT 76 contacts and takes the load of the transport frame 74, reforming the transfer system 71
- Secure the transport frame 74 to the SPMT 76
- Drive out and lower the transfer system 71/SPMT 76 down for travel
- Drive the SPMT 76 to the reclaimer boom 12a
- Position the SPMT 76 with the bucket wheel assembly 40 in front of the boom 12a
- Operate the jack system of the transfer system 71, which is incorporated in the SPMT 76 to a position where the hooks 66 are above the corresponding pins on the boom 12a
- Manoeuvre the transfer system 71/SPMT 76 to accurately locate the hooks 66 with the corresponding pins, and the fish plates 68 with a corresponding connection points on the boom 12a
- Lower the bucket wheel assembly 40 into the final boarding position with the shear key 70 engaged
- Bolt down the bucket wheel assembly 40
- Operate the jack system to lower the SPMT 76 to clear the bucket wheel assembly 40 to enable it to be driven out
- Drive the SPMT 76 away from the reclaimer with the transfer frame 74
- Reconnect all disconnected lines and install the new conveyor belt, the conveyor belt scrapers and control equipment
- Transport to the transfer frame 74 to a designated storage area where it is unloaded;
- Demobilise the SPM to 76.

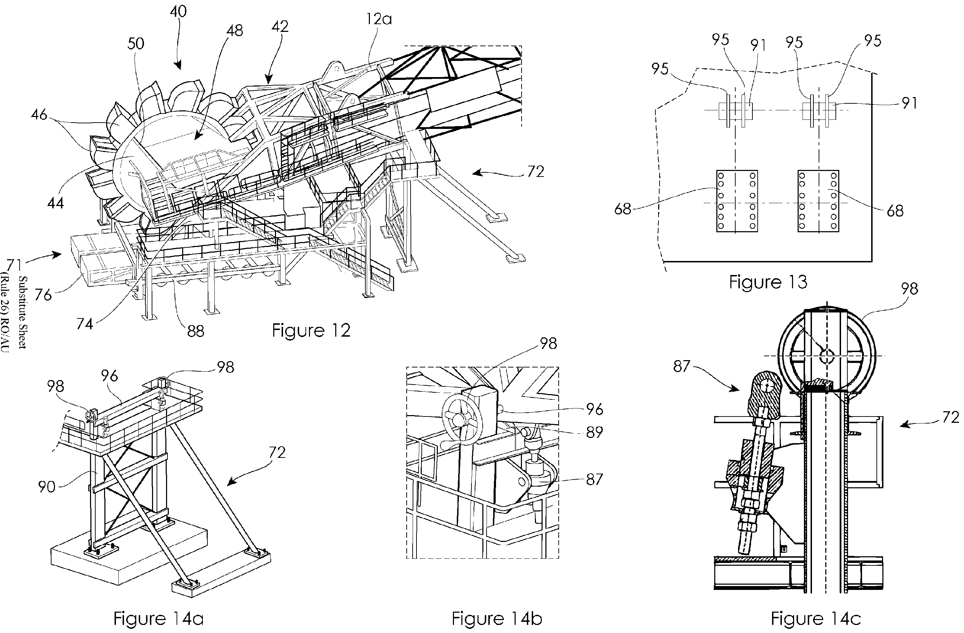

Figures 12-17c show a second embodiment of the rotable bucket wheel assembly 40 and associated method and equipment for swapping out an assembly 40 for a refurbished or new assembly 40. In describing this embodiment, the same reference numbers will be used as for the use embodiment to denote the same or substantially same features.

The second embodiment is similar to the first embodiment in that both have a structural frame 42 which supports the bucket wheel 44 and connects onto the boom 12a; and utilise a transfer system 71 having a transfer frame 74 and SPMT 76 to support and move bucket wheel assemblies 40 to and from the boom 12a. There are however differences in the connecting mechanisms operating between the structural frame 42 and the boom 12a as well as differences in how the transfer system 71 and in particular the transfer frame 74 engages the structural frame 42. Also, as explained in greater detail below in this embodiment an access platform 88 is utilised that supports the transfer frame 74 and provides multiple degrees of movement for adjusting the position of the bucket wheel assembly 40 which may greatly assist in the reconnection of the bucket wheel assembly 40 to the reclaimer.

The structural fame 42 supports the ring chute 48 and associated discharge chute50 which is coupled with the bucket wheel 44, wheel shaft, bearings and drive unit as in the previous embodiment although not individually visible in these figures. The structural frame 42 has a mounting structure 60 that includes a rectangular frame 61 and a number of connecting mechanisms for connecting the bucket wheel assembly 40 to the boom 12a.

However instead of three different types and a total of six connecting mechanisms; the structural frame 42 of this embodiment has only two types and a total of four connecting mechanisms, as shown in Figure 13.

The first type of connecting mechanism is in the form of pins 91 that pass through respective pad eyes formed on the rectangular frame 61 at a location corresponding to the hooks 66 of the first embodiment. Each pad eye locates between corresponding pairs of lugs 95 formed at each upper corner of the front end of the boom 12a. Respective pins 91 can then be inserted to couple a pad eye and a corresponding pair of lugs 95.

A second form of connecting mechanism used in this embodiment is a fish plate 68 like that described in relation to the first embodiment. However here only two fish plates are used, one of each lower corner of the rectangular frame 61. The fish plates 68 have a large tolerance for misalignment. While the vertical position is restrained by the pins 91, a vertical key is applied in the fish plates 68 to align the connection in horizontal direction.

Figure 12 shows the general structure of the bucket wheel assembly 40 as well as the setup for removing and installing a bucket wheel assembly 40. The bucket wheel assembly 40 is attached to a front end of the boom 12a, with the boom 12a located in its normal storm parking position and tied onto the support cradle 72. The access platform 88 is adjacent the support cradle 72. The transfer system 71 is also shown located underneath the bucket wheel assembly 40.

Figures 14a-14c show the support cradle 72 used in this embodiment. The cradle 72 is designed to lock the boom 12a positively against vertical and horizontal movements and to take the significant uplift forces once the bucket wheel assembly 40 has been removed. The cradle 72 has a structure which includes a vertical mainframe 90 that is braced backwards.

Two hydraulic tie-down mechanisms 87 with integrated mechanical locking assemblies are installed on top of the cradle 72. Packer plates 89 are inserted between boom 12a and cradle upper cross beam 96, once the boom 12a has been lowered. The boom is 12a pinned to the tie down mechanism 87 and pulled against the packer plates 89 with controlled hydraulic pressure, then mechanically locked in position.

For lateral restraint of the boom 12a, two conventional hand operated spindle mechanisms 98 are installed each side of the cross beam 96 of the cradle 72. Minor boom adjustment is possible within the backlash allowance of the slew gear. Access to the tie down cradle 72 is provided from the access platform 88.

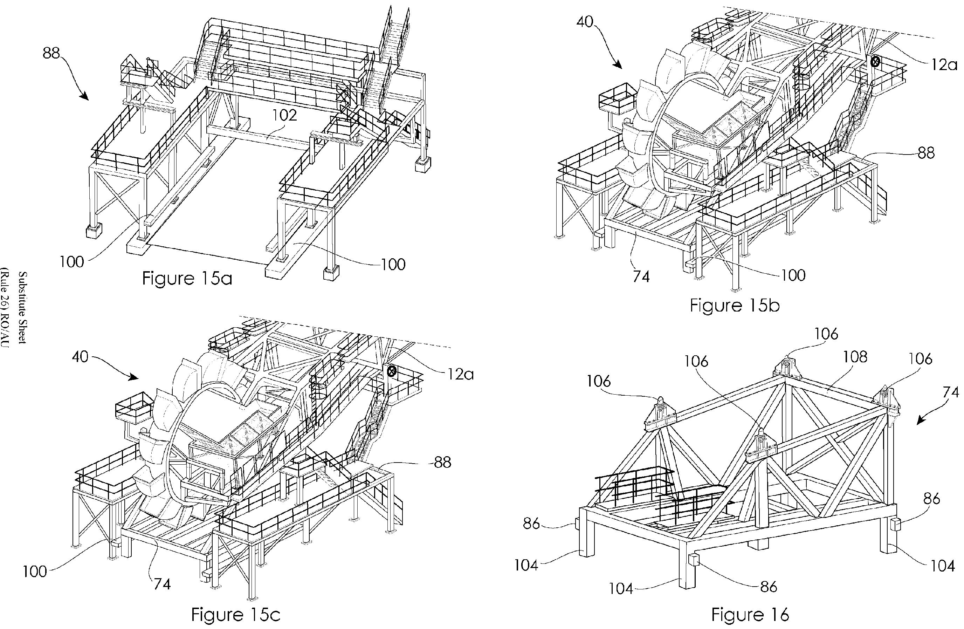

Figures 15a-15c illustrate an embodiment of the access platform 88. The main purpose of the access platform 88 is to provide adequate access around the bucket wheel assembly 40 during routine maintenance activities and for the bucket wheel assembly replacement procedure so that all necessary work can be executed safely from dedicated walkways without the need of temporary access via EWP or scaffolding. The access platform 88 also supports the transport frame 74 loaded with the bucket wheel assembly 40 and accommodates horizontal forces resulting from the alignment of the transport frame, and wind loads.

The access platform 88 has two main horizontal beams 100 on either side of a central opening providing a parking space for the transfer system 71 (SPMT 76 and the transport frame 74). When the transfer system 71 is located within the central opening the legs of the transport frame 74 are supported on the horizontal beams 100. All horizontal total movements of the transport frame 74 are actuated and controlled via hydraulic cylinders that on the longitudinal main beams 100 and on a cross beam 102 at the back of the platform 88. With this arrangement the bucket wheel assembly 40 can be aligned properly and effectively with the connection points of the boom 12a from the very course position attributed to the transfer system 71/SPMT 76 travel, to a precise position enabling structural reconnection.

The rotable bucket wheel assembly 40 is adjustable in the horizontal plane by hydraulic cylinders mounted at each corner of the access platform 88 and a set of hydraulic cylinders mounted to the back cross beam 102. The cylinders may be operated from ground level via portable power packs and with the assistance of spotters. For this purpose, the transport frame 74 rests on the longitudinal beams 100 and the SPMT 76 needs to be removed beforehand. Vertical adjustment of the bucket wheel assembly 40 is achieved via the jack system of the transfer frame 71, which comprises four hydraulic cylinders located under the support pins between bucket wheel assembly 40 and cradle. The cylinders are operated in a 4/3 configuration which allows tilting about the longitudinal axis with the two independent back cylinders and tilting about the traverse axis with the two combined front cylinders. In one non-limiting example vertical adjustment may be in the order +100mm under load of the assembly 40.

Figure 16 shows an example of the transport frame 74 in this embodiment. The frame 74 is formed with legs 104 and shoulders 86. The legs 104 enables the frame 74 to be placed on the ground while the shoulders 86 are configured to sit on the longitudinal beams 100. In contrast to the first embodiment in this embodiment the jack system is provided as a part of the transport frame 74 and is embodied by four vertical lift and lock mechanisms 106. The mechanisms 106 are at locations corresponding those of the seats 78 in the first embodiment for engaging the jacking points 58 of the structural frame 42.

To enable easy access for the assembly 40 replacement, a front cross beam 108 of the transport frame 74 may have a bolted connection enabling removal during long term storage (but will need to be reinstalled for transport). The bucket wheel 44 with buckets 46 attached can be rotated when resting on the transport frame 74.

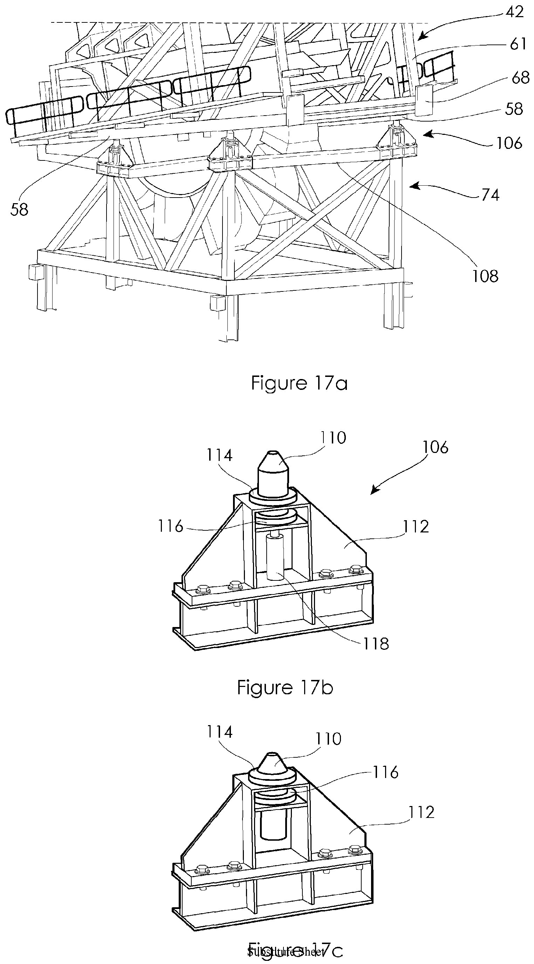

Figs 17a-c show the lift and lock mechanisms 106 and transport frame 74 coupled with the assembly 40.and transport frame 74. Each of the lock mechanisms includes a threaded and tapered pin 110 with hole clearance inside of a corresponding bracket 112. Two nuts 114, 116 are provided to lock (nut 114) and to counter lock (nut 116) the position. The bracket 112 provides sufficient clearance to support the pin 110 with a hydraulic jack 118 which is operable to extend and retract the pin 110 to adjust the vertical position of the assembly 40. During transport and horizontal adjustment, the assembly 40 is locked with the four pins 110 to the transport frame 74. The pins 110 are pushed into counter sections formed in the jacking points 58 of the structural frame 42.

The change out of a rotable bucket wheel assembly 40 involves respective: parking; tiedown; removal and installation procedures. These are broadly described below.

### Parking procedure

- The reclaimer 10a is driven to its parking position
- The storm lock pin is engaged
- The boom 12a is slewed to the parking position
- The boom 12a is lowered to the primary parking limit
- The boom 12a is lowered to the final parking limit
- The reclaimer 10a is isolated and washed down

### Pre-Tie Down Procedure

Prior to the tie down procedure commencing, the transport frame 74 on the SPMT 76 (i.e. the transfer system 71) is driven into the central opening of the platform 88, then lower the SPMT to place the shoulders 86 on the longitudinal beams 100.

### Tie Down Procedure

The boom 12a is fully restrained against uplift and lateral movements. This involves in this embodiment the boom 12a being pulled down to the tie down cradle 72 and secured in vertical and lateral direction. With reference to Figs 14a-14c this can be achieved with the following procedure performed at both sides of the support cradle 72 simultaneously:
- The boom 12a is adjusted and locked in lateral direction by use of the spindle 98 and associated hand-wheel.
- Packer plates 89 are fitted into a gap between the boom 12a and the support for tie down
- A hydraulic tie down mechanism 87 is connected to the boom 12a and mechanically locked against upward movement of the boom
- The boom 12a is pulled down to the packer plates 89 by use of the tie down mechanism
- The tie down mechanism 87 is locked mechanically
- The reclaimer luff cylinders (not shown) are bled off so the full weight of the boom uplift is supported by the cradle.

### Rotable Bucket Wheel Assembly Removal Procedure

The rotable bucket wheel assembly 40 is removed as follows:
- Both strands of the conveyor belt are clamped at both sides of the connecting interface
- Cut both strands at the connecting interface
- Disconnect all services (water, lubrication, power and instrumentation)
- Align transport frame 74 with the assembly in horizontal plane using the hydraulics of the platform 88
- Connect the assembly 40 to the transport frame 74 in vertical direction with the retractable pins 110 of the jack system
- Take the load of the assembly 40 with the hydraulic jacks 118 and secure using the nuts 114, 116
- Remove the bolted connection of the fish plates 68
- Remove the pin connection 91 assisted by jacking action of the vertical cylinders
- Lift the assembly 40 on the transport frame 74 by use of the SPMT 76
- Ensure that the assembly 40 is clear of platform 88 and clear of lugs 95 ready for removal and drive it out
- Transport the assembly to a temporary storage location and unload

### Rotable Bucket Wheel Assembly Installation Procedure

The installation of a new or refurbished assembly 40 is performed as follows:
- Drive a transfer system 71 via its corresponding SPMT 76 (which is a different SPTM 76 to the one carrying the previously removed assembly 40) with a new/refurbished assembly supported on a transport frame 74 into the central opening of the platform 88
- Operate the SPMT 76 to lower the transport frame 74 so that the shoulders 86 are on the beams 100 of the access platform 88 but clear of the connection face with the boom 12a
- Adjust the location of the frame 74 and assembly 40 to fit to the connection of the boom
- Pull the assembly 40 into the connecting position by use of the hollow plunger cylinders on the transport frame 74 (the push cylinders push against the platform 88 to fine tune the position of the transport frame 78 relative to the platform 88)
- Further adjust as necessary the location of the assembly 40 using the hydraulics of the transport frame 74 to align the pad eyes of the structural frame between the lugs 95
- Install the pins 91
- Readjust if necessary
- Bolt the fish plates 68 to the boom 12a
- Disconnect the assembly form the transport frame 74
- Connect and recommission all services (water, lubrication, power and instrumentation)
- Reverse the tie-down procedure

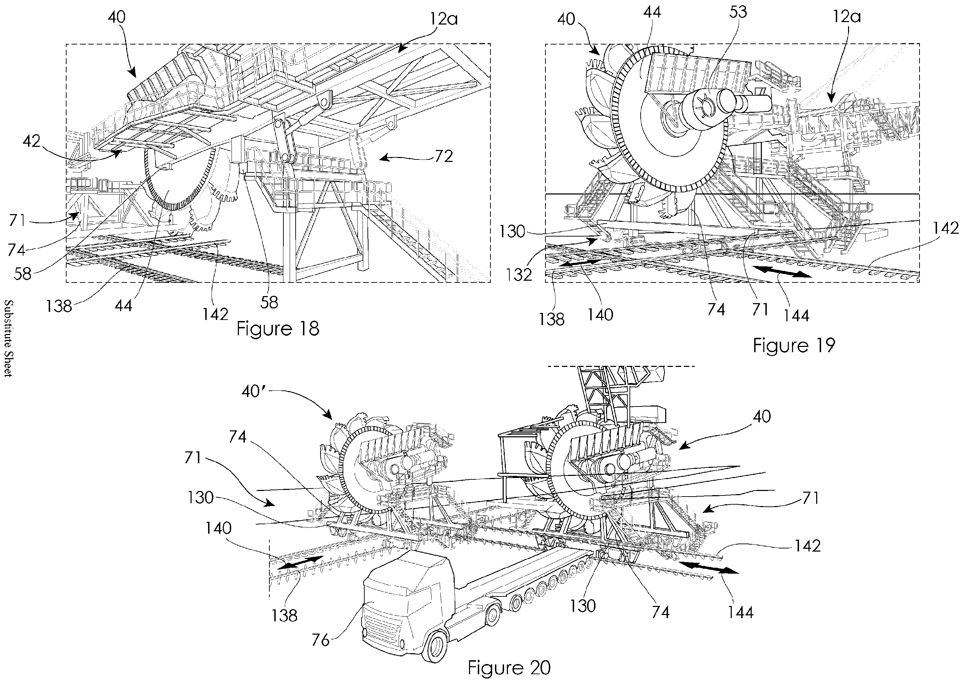

Figures 18-22 show a third embodiment of the rotable bucket wheel assembly 40 and associated method and equipment for swapping out an assembly 40 for a refurbished or new assembly 40. In describing this embodiment, the same reference numbers will be used as for the use embodiment to denote the same or substantially same features.

This embodiment is similar to the second embodiment shown in Figures 12-17c in that it uses a transfer system 71 having a transport cradle 74 having a jack system comprised of four jacks to engage jacking points on the structural frame 42 of the rotable bucket wheel assembly 40, and uses a pin connection at the top corners of the structural frame 42 adjacent the boom 12a and bolted connections at the bottom two corners, similar to the pins 91 and fish plate 68 shown in Figure 13.

With reference to Figures 18-20 a substantive difference however lies in the motive aspect of the transfer system 71 for moving the assembly 40 supported on a transport cradle 74 of the transfer system 71 to facilitate the swapping out the worn assembly 40 for a new or refurbished assembly 40. In this embodiment the transfer system 71 has rail mounted bogie system 132 rather than a SPMT 76 as in the first and second embodiments. The bogie system 132 supports a structure 130 that includes a transport frame 74 as well as an integrated work platform. The bogie system 132 enables the transfer system 71 and associated transport frame 74 to move along mutually orthogonal rail tracks 138, 142.

The bogie system 132 comprises: a first bogie system enabling movement of the transport frame 74 parallel to and in alignment with the boom 12a along the tracks 138 as shown by double headed arrow 140; and a second bogie system enabling movement of the transport frame 74 transverse to the boom 12a along the tracks 142 as shown by double headed arrow 144.

The bogie systems are equipped with drives to roll in and roll out the assembly 40. Thus, during the shutdown of the reclaimer no additional manipulation equipment (such as a trailer, or SPMT) is needed which may cause additional down time as the cradle has to be moved also sideways.

When the transfer system 71 and supported assembly 40 is being moved along tracks 138 by the first bogie system, the second bogie system is disengaged. Conversely when the transfer system 71 and supported assembly 40 is being moved along the tracks 142 by the second bogie system, the first bogie system is disengaged. Engagement and disengagement of the bogie systems is achieved using hydraulics. The second bogie system is disengaged during travel along the tracks 138 and is activated with a hydraulic system once the transverse tracks 142 are reached. Fully engaged, the first bogie system is lifted/retracted and transverse movement along rail 142 is possible. The complete process mitigates potential risk by not needing any manual work in the vicinity of the cradle

The rail mounted transfer system 71 can achieve minimal down time, accurate preadjustment and risk mitigation. The transfer system 71 with the new assembly 40' can be located on the rails by trailer or SPMT prior to the shutdown because it is outside of the operation limit of the reclaimer. As mentioned previously, no interaction with other transport equipment during shut down is needed.

If the worn assembly 40 is to be transported to a different location for maintenance work a hydraulic trailer or SPMT 76 (Fig 20) can be placed underneath the frame 74 and the complete unit can be lifted and transported

The procedure for changing out a bucket wheel assembly 40 using the transfer system 71 will now be described.

### 1. Positioning of Machine

Prior the shutdown an empty transfer system 71 and a transfer system 71 with a refurbished bucket wheel assembly 40 are placed on top of the rail system by hydraulic trailer or SPMT in the maintenance area.

The bucket wheel reclaimer 10a is driven to a maintenance area and slewed to locking position at 32° slew angle.

### 2. Fixing Machine to ground mounted ballast

The boom 12a is lowered onto a support cradle (ground mounted ballast), with the boom 12a luffed to approximately -10°. The horizontal adjustment of the bucket wheel assembly 40 relative to the tracks may be done by spindles mounted on the storm tower.

The boom 12a is locked to the ground by either a manual or hydraulic mechanism mounted onto the ground mounted ballast structure. Then a degree of pretension between boom and ground mounted ballast is generated by bleeding off the luff cylinders of the reclaimer 10a. The pretension is required to have just minimal movement during the change out process between the boom 12a and the bucket wheel assembly 40.

### 3. Bucket wheel head part removal steps.

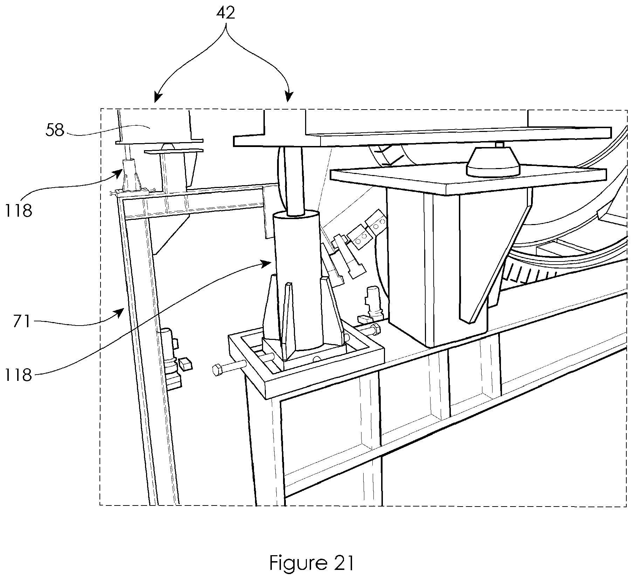

- Relocate the empty transfer system 71 to a position underneath the bucket wheel assembly 40 by using the travel drives of the transfer bogie system and engage the travel drive brakes.
- Adjust the position of all four hydraulic jacks 118 (two shown in Fig 21) of the jack system and extend jacks towards the structural frame 42 and in particular the coupling points 58. No pressure is applied when the jacks touch the structural frame 42 but hydraulic lines of the jack system are closed. For additional safety all jacks may be equipped with locking nuts.
- Disconnect and unplug all electrical, communication, lubrication, and water lines between boom 12a and assembly 40.
- Install belt pulling equipment in front of the boom 12a for worn belt removal.
- Cut the belt on top side and pull out worn belt.
- Open all bolts of the fish plate connection at a bottom chord of the boom 12a.
- Open adjustment screws of the two front jacks so that the movement in boom direction towards the boom end is not locked by the screw (approximately 20mm gap).
- Jack up the two front hydraulic jacks so that a gap (for example 10mm) is created between the flanges at the bolt connection of the boom bottom chord.
- Lock the adjustment screws at the front jacks again and ensure that all other adjustment screws are locked for avoiding any movement of a single jack.
- Jack up the rear jacks to bring the load acting on the pins at the top chord close to zero.
- Secure jacks with locking nuts.
- Retract the pins at the top chord. This may be done by using a hydraulic push-pulling jack.
- Lower the bucket wheel assembly 40 down onto fixed stools by using all four jacks of the jacking system.
- Insert bolts to fix connection between transfer system 71 and the bucket wheel assembly 40.
- Drive the transfer system 71 with the bucket wheel assembly 40 away from the boom 12a along the tracks 138, 142 to a storage or maintenance area using the bogie system.

### 4. New bucket wheel assembly 40 attachment steps

- Drive transfer system 71 with the refurbished bucket wheel assembly 40 along the tracks 138, 142 towards to boom 12a.
- Lift up the bucket wheel assembly 40 by using the jack system (i.e. the four hydraulic jacks) on top of the transfer frame 74 towards the vertical hard stops on the boom 12a next to the pin connection
- Secure jacks with locking nuts
- Adjust the bucket wheel assembly 40 in a horizontal plane towards the hard stop next to the pin connection as required by using the adjustment screws positioned around the hydraulic jacks..
- Insert the pin 91 to connect the pad eyes of the structural frame 42 to the lugs 95 of the boom 12a.
- Operate the jack system to remove the load from the transfer system 71.
- Connect the fish plates at the bottom chord of the boom 12a with those of the structural frame 42.
- Drive empty transfer system 71 out to a storage position along the tracks 140, 100 free to using the bogie system.
- Connect the cable, water and lubrication connection between boom 12a and assembly 40.
- Insert new a new conveyor belt by using belt pulling equipment.
- Disconnect the boom 12a from the support structure 72 and associated the ground mounted ballast.

Embodiments of the disclosed rotable bucket wheel assembly 40 provide the genesis for a new form of boom for a reclaimer. The boom comprises the combination of a first structural portion and the structural frame 42 of the rotable bucket wheel assembly 40. This combination provides the substantive structural and operational features of a boom of a conventional reclaimer but of course has the benefit that the bucket wheel assembly 40 which includes the structural frame 42 can be decoupled together with the remaining components of the rotable bucket wheel assembly 40 as a single unit.

An embodiment of the disclosed method for performing maintenance on and/or repairing a bucket wheel reclaimer includes an initial and prerequisite step of forming the boom of the reclaimer as a first structural portion and a demountable structural frame coupled to a front end of the first structural portion. In this method the structural frame includes the structural frame 42 of the rotable bucket wheel assembly 40. The maintenance thereafter involves uncoupling the structural frame 42 from the front end of the boom; and lifting the bucket wheel assembly 40 by the structural frame 42. This is achieved by attaching the structural frame 42 to a lifting machine via the lifting points 58. The use of cranes can be avoided by lifting the assembly from below, using a jack system. The transfer system 71 can initially support the rotable bucket wheel assembly 40 during decoupling of the structural frame 42 from the remainder of the boom. Once the structural frame 42 is decoupled a vehicle can move or transport the bucket wheel assembly 40 which of course includes the structural frame 42 as a single unit to a maintenance location.

In the claims which follow, and in the preceding description, except where the context requires otherwise due to express language or necessary implication, the word "comprise" and variations such as "comprises" or "comprising" are used in an inclusive sense, i.e. to specify the presence of the stated features but not to preclude the presence or addition of further features in various embodiments of the apparatus and method as disclosed herein.

## Claims

1. A rotable bucket wheel assembly (40) for coupling to a boom (12a) of a bucket wheel reclaimer (10a) comprising:
a bucket wheel (44);
a shaft (51) coupled to the bucket wheel (44);
bearings (52) through which the shaft (51) extends; and **characterized by**
a structural frame (42) on which the bucket wheel (44) and shaft (51) are supported, wherein the structural frame (42) is arranged for demountable attachment to an end of a boom (12a) of a bucket wheel reclaimer (10a).

2. The rotable bucket wheel assembly (40) according to claim 1 wherein the structural frame (42) comprises a plurality of coupling points (58) to enable coupling to a transfer system (71) to facilitate transferring the load of the bucket wheel assembly (40) from the boom (12a) to the transfer system (71) whereby the bucket wheel assembly (40) is capable of being transported away from the boom (12a) by the transfer system (71).

3. The rotable bucket wheel assembly (40) according to claim 2 wherein the coupling points (58) are configured to facilitate coupling with the transfer system (71) when the transfer system (71) is disposed beneath the structural frame (42).

4. The rotable bucket wheel assembly (40) according to any one of claims 1 -3 wherein the structural frame (42) is provided with a plurality of connecting mechanisms (66, 68, 70) configured to cooperate with complementary connecting mechanisms on the boom (12a), wherein when the structural frame (42) is attached to the boom (12a) the connecting mechanisms (66, 68, 70) on the frame (42) engage the complementary connecting mechanisms on the boom (12a).

5. The rotable bucket wheel assembly (40) according to claim 4 wherein the connecting mechanisms (66, 68, 70) comprise locating elements formed on the structural frame (42) and arranged to cooperate with associated locating elements on the boom (12a) and wherein upon engagement of the locating elements remaining connecting mechanisms (68, 70) on the structural frame (42) are in alignment with associated remaining connecting mechanisms on the boom (12a).

6. The rotable bucket wheel assembly (40) according to claim 5 wherein the locating elements comprise hooks (66) formed on the structural frame (42) or a plurality of pad eyes configured to receive coupling pins (91).

7. A boom (12a) for a rotable bucket wheel reclaimer (10a)
comprising: a first structural portion having a front end; and
a structural frame (42) demountable coupled to the front end of the first structural portion wherein the structural frame (42) is the structural frame (42) of a rotable bucket wheel assembly (40) according to any one of claims 1-6.

8. A method of refurbishing a bucket wheel reclaimer (10a) having a boom (12a) supporting a rotable bucket wheel assembly (40) in accordance with any one of claims 1-6, the method comprising:
forming the boom (12a) as a first structural portion and a demountable structural frame (42) coupled to a front end of the first structural portion wherein the demountable structural frame (42) is the structural frame (42) of a rotatable bucket wheel assembly (40);
uncoupling the structural frame (42) from the front end of the boom (12a); and
moving the bucket wheel assembly (40) as a single unit to a maintenance location.

9. The method according to claim 8 wherein moving the bucket wheel assembly (40) comprises transferring the load of the bucket wheel assembly (40) to a transfer system (71) disposed beneath the structural frame (42).

10. The method according to claim 9 comprising locating a transfer system (71) beneath the structural frame (42) and engaging the coupling points (58) of the structural frame (42) with the transfer system (71) wherein the transfer system (71) carries the load of the bucket wheel assembly (40).

11. The method according to claim 10 comprising disconnecting the connecting mechanisms (66, 68, 70) of the structural frame (42) from associated connecting mechanisms on the boom (12a) when the load of the bucket wheel assembly (40) is transferred to the transfer system (71).

12. The method according to any one of claims 8-11 wherein transferring the load of the bucket wheel assembly (40) comprises operating a jack system on the transfer system (71).

13. The method according to any one of claims 9 to 12 comprising forming the transfer system (71) as a transfer frame (74) and a self-propelled modular trailer (76) on which the transfer frame (74) is demountably supported.

14. The method according to any one of claims 9 to 13 comprising forming the transfer system (71) as a transfer frame (74) on bogie mounted on a rail system.

## Patentansprüche

1. Umlauf-Schaufelradbaugruppe (40) zum Koppeln an einen Ausleger (12a) eines Schaufelrad-Rückladebaggers (10a), umfassend:
ein Schaufelrad (44),
eine Welle (51), die an das Schaufelrad (44) gekoppelt ist,
Lager (52), durch die sich die Welle (51) erstreckt, und **gekennzeichnet durch**
einen Strukturrahmen (42), auf dem das Schaufelrad (44) und die Welle (51) gestützt sind,
wobei der Strukturrahmen (42) für das abnehmbare Anbringen an einem Ende eines Auslegers (12a) eines Schaufelrad-Rückladebaggers (10a) angeordnet ist.

2. Umlauf-Schaufelradbaugruppe (40) nach Anspruch 1, wobei der Strukturrahmen (42) eine Vielzahl von Kopplungspunkten (58) umfasst, um die Kopplung an ein Übertragungssystem (71) zu ermöglichen, um die Übertragung der Last der Schaufelradbaugruppe (40) von dem Ausleger (12a) an das Übertragungssystem (71) zu erleichtern, wodurch die Schaufelradbaugruppe (40) mittels des Übertragungssystems (71) von dem Ausleger (12a) wegtransportiert werden kann.

3. Umlauf-Schaufelradbaugruppe (40) nach Anspruch 2, wobei die Kopplungspunkte (58) dazu ausgestaltet sind, die Kopplung mit dem Übertragungssystem (71) zu erleichtern, wenn das Übertragungssystem (71) unter dem Strukturrahmen (42) angeordnet ist.

4. Umlauf-Schaufelradbaugruppe (40) nach einem der Ansprüche 1-3, wobei der Strukturrahmen (42) mit einer Vielzahl von Verbindungsmechanismen (66, 68, 70) versehen ist, die zum Zusammenwirken mit komplementären Verbindungsmechanismen an dem Ausleger (12a) ausgestaltet sind, wobei die Verbindungsmechanismen (66, 68, 70) an dem Rahmen (42) die komplementären Verbindungsmechanismen an dem Ausleger (12a) in Eingriff nehmen, wenn der Strukturrahmen (42) an dem Ausleger (12a) angebracht ist.

5. Umlauf-Schaufelradbaugruppe (40) nach Anspruch 4, wobei die Verbindungsmechanismen (66, 68, 70) Positionierungselemente umfassen, die an dem Strukturrahmen (42) ausgebildet und dazu angeordnet sind, mit zugeordneten Positionierungselementen an dem Ausleger (12a) zusammenzuwirken, und wobei restliche Verbindungsmechanismen (68, 70) an dem Strukturrahmen (42) auf zugeordnete verbleibende Verbindungsmechanismen an dem Ausleger (12a) ausgerichtet sind, wenn die Positionierungselemente in Eingriff kommen.

6. Umlauf-Schaufelradbaugruppe (40) nach Anspruch 5, wobei die Positionierungselemente Haken (66), die an dem Strukturrahmen (42) ausgebildet sind, oder eine Vielzahl von Deckaugen, die zur Aufnahme von Kopplungsbolzen (91) ausgestaltet sind, umfassen.

7. Ausleger (12a) für einen Umlauf-Schaufelrad-Rückladebagger (10a)
umfassend: einen ersten Strukturabschnitt mit einem vorderen Ende und
einen Strukturrahmen (42), der abnehmbar an das vordere Ende des ersten Strukturabschnitts gekoppelt ist, wobei der Strukturrahmen (42) der Strukturrahmen (42) einer Umlauf-Schaufelradbaugruppe (40) nach einem der Ansprüche 1-6 ist.

8. Verfahren zur Instandsetzung eines Schaufelrad-Rückladebaggers (10a) mit einem Ausleger (12a), der eine Umlauf-Schaufelradbaugruppe (40) nach einem der Ansprüche 1-6 stützt, wobei das Verfahren Folgendes umfasst:
Ausbilden des Auslegers (12a) als einen ersten Strukturabschnitt und eines abnehmbaren Strukturrahmens (42), der an ein vorderes Ende des ersten Strukturabschnitts gekoppelt ist, wobei der abnehmbare Strukturrahmen (42) der Strukturrahmen (42) einer Umlauf-Schaufelradbaugruppe (40) ist,
Entkoppeln des Strukturrahmens (42) von dem vorderen Ende des Auslegers (12a), und
Bewegen der Schaufelradbaugruppe (40) als eine einzige Einheit an einen Instandsetzungsort.

9. Verfahren nach Anspruch 8, wobei das Bewegen der Schaufelradbaugruppe (40) das Übertragen der Last der Schaufelradbaugruppe (40) an ein unter dem Strukturrahmen (42) angeordnetes Übertragungssystem (71) umfasst.

10. Verfahren nach Anspruch 9, umfassend das Anordnen eines Übertragungssystems (71) unter dem Strukturrahmen (42) und das Ineingriffbringen der Kopplungspunkte (58) des Strukturrahmens (42) mit dem Übertragungssystem (71), wobei das Übertragungssystem (71) die Last der Schaufelradbaugruppe (40) trägt.

11. Verfahren nach Anspruch 10, umfassend das Trennen der Verbindungsmechanismen (66, 68, 70) des Strukturrahmens (42) von zugeordneten Verbindungsmechanismen an dem Ausleger (12a), wenn die Last der Schaufelradbaugruppe (40) an das Übertragungssystem (71) übertragen wird.

12. Verfahren nach einem der Ansprüche 8-11, wobei die Übertragung der Last der Schaufelradbaugruppe (40) das Betreiben eines Hebebocksystems an dem Übertragungssystem (71) umfasst.

13. Verfahren nach einem der Ansprüche 9 bis 12, umfassend das Ausbilden des Übertragungssystems (71) als ein Übertragungsrahmen (74) und ein selbstfahrender Modulhänger (76), auf dem der Übertragungsrahmen (74) abnehmbar gestützt ist.

14. Verfahren nach einem der Ansprüche 9 bis 13, umfassend das Ausbilden des Übertragungssystems (71) als ein Übertragungsrahmen (74) auf einem Drehgestell, das auf einem Schienensystem montiert ist.

## Revendications

1. Ensemble roue à godets rotatif (40) à accoupler à une flèche (12a) d'un appareil de reprise de roue à godets (10a) comprenant :
une roue à godets (44) ;
un arbre (51) accouplé à la roue à godets (44) ;
des paliers (52) à travers lesquels l'arbre (51) s'étend ; et **caractérisé par**
un cadre structurel (42) sur lequel la roue à godets (44) et l'arbre (51) sont supportés,
le cadre structurel (42) étant conçu pour être fixé de manière démontable à une extrémité d'une flèche (12a) d'un appareil de reprise de roue à godets (10a).

2. Ensemble roue à godets rotatif (40) selon la revendication 1, le cadre structurel (42) comprenant une pluralité de points d'accouplement (58) pour permettre l'accouplement à un système de transfert (71) afin de faciliter le transfert de la charge de l'ensemble roue à godets (40) de la flèche (12a) au système de transfert (71), moyennant quoi l'ensemble roue à godets (40) peut être transporté à l'opposé de la flèche (12a) par le système de transfert (71).

3. Ensemble roue à godets rotatif (40) selon la revendication 2, les points d'accouplement (58) étant conçus pour faciliter l'accouplement avec le système de transfert (71) lorsque le système de transfert (71) est disposé sous le cadre structurel (42).

4. Ensemble roue à godets rotatif (40) selon l'une quelconque des revendications 1 à 3, le cadre structurel (42) étant pourvu d'une pluralité de mécanismes de liaison (66, 68, 70) conçus pour coopérer avec des mécanismes de liaison complémentaires sur la flèche (12a), lorsque le cadre structurel (42) est fixé à la flèche (12a), les mécanismes de liaison (66, 68, 70) sur le cadre (42) venant en prise avec les mécanismes de liaison complémentaires sur la flèche (12a).

5. Ensemble roue à godets rotatif (40) selon la revendication 4, les mécanismes de liaison (66, 68, 70) comprenant des éléments de localisation formés sur le cadre structurel (42) et disposés pour coopérer avec des éléments de localisation associés sur la flèche (12a) et lors de la mise en prise des éléments de localisation, les mécanismes de liaison restants (68, 70) sur le cadre structurel (42) étant alignés avec les mécanismes de liaison restants associés sur la flèche (12a).

6. Ensemble roue à godets rotatif (40) selon la revendication 5, les éléments de localisation comprenant des crochets (66) formés sur le cadre structurel (42) ou une pluralité d'œillets conçus pour recevoir des goupilles d'accouplement (91).

7. Flèche (12a) pour un appareil de reprise de roue à godets rotatif (10a)
comprenant : une première partie structurelle ayant une extrémité avant ; et
un cadre structurel (42) démontable accouplé à l'extrémité avant de la première partie structurelle, le cadre structurel (42) étant le cadre structurel (42) d'un ensemble roue à godets rotatif (40) selon l'une quelconque des revendications 1 à 6.

8. Procédé de remise à neuf d'un appareil de reprise de roue à godets (10a) ayant une flèche (12a) supportant un ensemble roue à godets rotatif (40) conformément à l'une quelconque des revendications 1 à 6, le procédé comprenant :
la formation de la flèche (12a) en tant que première partie structurelle et cadre structurel démontable (42) accouplé à une extrémité avant de la première partie structurelle, le cadre structurel démontable (42) étant le cadre structurel (42) d'un ensemble roue à godets rotatif (40) ;
la séparation du cadre structurel (42) de l'extrémité avant de la flèche (12a) ; et
le déplacement de l'ensemble roue à godets (40) en tant qu'unité unique vers un lieu de maintenance.

9. Procédé selon la revendication 8, le déplacement de l'ensemble roue à godets (40) comprenant le transfert de la charge de l'ensemble roue à godets (40) à un système de transfert (71) disposé sous le cadre structurel (42).

10. Procédé selon la revendication 9 comprenant le placement d'un système de transfert (71) sous le cadre structurel (42) et la mise en prise des points d'accouplement (58) du cadre structurel (42) avec le système de transfert (71), le système de transfert (71) portant la charge de l'ensemble roue à godets (40).

11. Procédé selon la revendication 10 comprenant la séparation des mécanismes de liaison (66, 68, 70) du cadre structurel (42) des mécanismes de liaison associés sur la flèche (12a) lorsque la charge de l'ensemble roue à godets (40) est transférée au système de transfert (71) .

12. Procédé selon l'une quelconque des revendications 8 à 11, le transfert de la charge de l'ensemble roue à godets (40) comprenant l'utilisation d'un système de vérin sur le système de transfert (71).

13. Procédé selon l'une quelconque des revendications 9 à 12 comprenant la formation du système de transfert (71) en tant que cadre de transfert (74) et remorque modulaire autopropulsée (76) sur laquelle le cadre de transfert (74) est supporté de manière démontable.

14. Procédé selon l'une quelconque des revendications 9 à 13, comprenant la formation du système de transfert (71) en tant que cadre de transfert (74) sur un bogie monté sur un système de rails.
